# EUROPEAN PATENT APPLICATION

(11) **EP 4 258 037 A1**
(43) Date of publication of application: **11.10.2023**
(21) Application number: 22167221.5
(22) Date of filing: 07.04.2022
(51) Int. Cl.: G02B 21/24

(54) **SHEATH GAS FLOW SYSTEM**

(71) Applicant: Merck Patent GmbH, 64293 Darmstadt (DE)
(72) Inventor: KUEHN, Clemens, 64293 Darmstadt (DE)
(74) Representative: Merck Serono S.A. Intellectual Property

(57) **Abstract**

Sheath gas flow system (10) for a microscope (100), including an injector (20) and an extractor (30) configured to be mounted to said microscope about an observation zone (105) of the microscope, the injector (20) comprising a housing (21) having at least one sheath gas inlet (25) and an injector wall (22) comprising a plurality of sheath gas injector orifices (24) arranged around said observation zone when the sheath gas flow system is mounted to said microscope for injecting a sheath of gas around the observation zone (105), the extractor (30) comprising at least one gas outlet (35) and an extractor wall (32) comprising a plurality of sheath gas extraction orifices (34) for sucking in the sheath of gas.

## Description

The present invention relates to a sheath gas flow system for a microscope and to a microscope system comprising a microscope and a sheath gas flow system.

In optical microscopy, a sample is illuminated and a magnified image of the sample is generated through an optical system of a microscope. The magnified image can either be directly observed by a user of the microscope through an ocular lens or captured by a camera connected to the microscope and observed by the user via a display.

Some samples are sensitive to an ambient air component such as oxygen, water vapor or carbon dioxide, which requires means to shield these samples from the ambient air.

A conventional means of shielding a sample from the ambient air is to apply a cover to the sample, such as a thin glass slide or a highly viscous oil, which makes manipulation of the sample difficult if not impossible and in the case of oil can introduce contaminants into the sample which may be unacceptable if the sample is to be used later.

In addition, samples may contain or emit hazardous substances such as solvent vapors, germs, bacteria, or viruses that may pose a health risk to the person handling these samples on the microscope. Especially since such handling typically requires a longer period of time and proximity to the source of the substance. Also, hazardous substances emanating from samples may also be harmful to the equipment in use, e.g., sensitive parts of the microscope.

Conventional solutions for protecting the user from hazards emanating from the sample are containment systems such as glove boxes, fume hoods or laminar flow safety workbenches. However, these containment systems shield the entire microscope from the user and thus limit the observation of the sample to the use of a camera. Moreover, direct manipulation of the sample may become tedious.

It is an object of this invention to provide a sheath gas flow system for a microscope that is easy and economical to implement, install and use.

It is also an object of this invention to provide a microscope system comprising a microscope and a sheath gas flow system that is easy and economical to implement, install and use.

It is advantageous to provide a sheath gas flow system for a microscope that shields a sample from the ambient air and allows direct manipulation of the sample.

It is advantageous to provide a sheath gas flow system for a microscope that shields a user of the microscope as well as the equipment from substances emitted by a sample and allows direct manipulation of the sample.

Objects of the invention have been achieved by providing a sheath gas flow system according to claim 1.

Objects of the invention have been achieved by providing a microscope system according to claim 16.

Dependent claims recite various advantageous features of the invention.

Disclosed herein is a sheath gas flow system for a microscope, including an injector and an extractor configured to be mounted to said microscope about an observation zone of the microscope, the injector comprising a housing having at least one sheath gas inlet and an injector wall comprising a plurality of sheath gas injector orifices arranged around said observation zone when the sheath gas flow system is mounted to said microscope for injecting a sheath of gas around the observation zone, the extractor comprising at least one gas outlet and an extractor wall comprising a plurality of sheath gas extraction orifices for sucking in the sheath of gas.

According to an advantageous embodiment, the injector housing comprises a chamber bounded by the injector wall and connected fluidically to the at least one sheath gas inlet, the plurality of injector orifices connected fluidically to the chamber.

According to an advantageous embodiment, the at least one gas outlet of the extractor is in fluid communication with the plurality of extraction orifices via a chamber formed within a housing of the extractor.

According to an advantageous embodiment, the at least one sheath gas inlet comprises a releasable coupling for releasable connection to a complementary coupling of a first gas conduit.

According to an advantageous embodiment, the at least one gas outlet comprises a releasable coupling for releasable connection to a complementary connector of a second gas conduit.

According to an advantageous embodiment, the sheath gas flow system further comprises a gas supply system comprising a gas source for supplying a sheath gas.

According to an advantageous embodiment, the gas source comprises a filter, such as a membrane filter.

According to an advantageous embodiment, the gas supply system comprises a pressure control system to adjust the gas pressure such that the flow of the sheath gas in the sheath is laminar.

According to an advantageous embodiment, the injector is removably mountable to the microscope.

According to an advantageous embodiment, the directly preceding claim, wherein the injector housing comprises two or more detachable parts.

According to an advantageous embodiment, the housing of the injector is removably mountable to a light collecting element of the microscope.

According to an advantageous embodiment, the extractor is removably mountable to the microscope.

According to an advantageous embodiment, the extractor housing comprises two or more detachable parts.

According to an advantageous embodiment, an aperture of the injector wall is configured to receive the light collecting element.

According to an advantageous embodiment, the extractor wall comprises a central area and the plurality of extraction orifices surround the central area of the extractor wall.

According to an advantageous embodiment, the sheath gas flow system further comprises a gas extraction system comprising an extraction pump.

According to an advantageous embodiment, the extractor housing comprises an aperture for receiving a light source or serving as an optical aperture for a light source.

Also disclosed herein is a microscope system comprising a microscope and a sheath gas flow system.

According to an advantageous embodiment the light collecting element of the microscope is integrated into the injector at the aperture of the injector wall.

Further objects and advantageous features of the invention will be apparent from the claims, from the detailed description, and annexed drawings, in which:
Figure 1a is a schematic view of a microscope system according to an embodiment of the invention;
Figure 1b is a schematic view of a microscope system according to another embodiment of the invention;

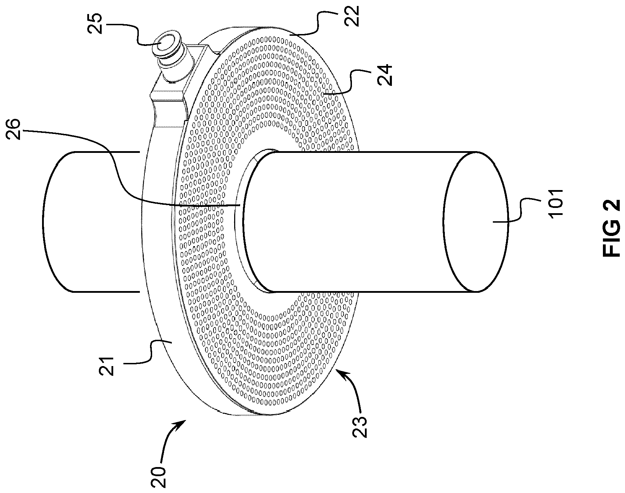

Figure 2 is a schematic view of an injector of a sheath gas flow system according to an embodiment of the invention;

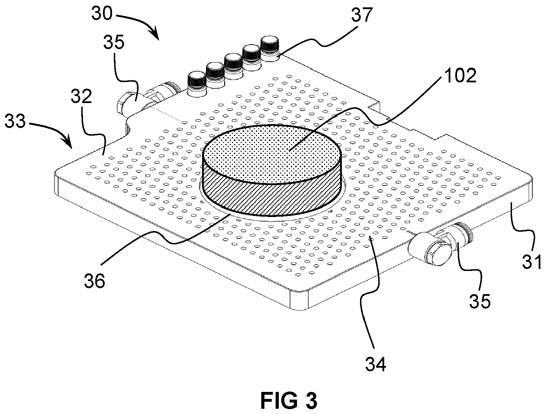

Figure 3 is a schematic view of an extractor of a sheath gas flow system according to an embodiment of the invention.

Referring to the figures, a microscope system 1 according to embodiments of the invention comprises a microscope 100 and a sheath gas flow system 10. The microscope 100 may be of any type of optical microscope known in the art based on any measurement principle, including, but not limited to light scattering, linear absorption, polarization, phase-contrast, fluorescence, two-photon excitation (two-photon fluorescence, second harmonic generation), three-photon excitation, or in general, multi-photon excitation. The microscope 100 may comprise any feature of such a conventional optical microscope, e.g., a light source 101 for illuminating the sample and a sample stage 102. The sample stage 102 may be a simple stage for holding a sample or a mechanical stage that allows a precise translation and/or rotation of the sample.

The microscope 100 comprises a light collecting element 103 for collecting light reflected or scattered from or transmitted through the sample. The light collecting element 103 may be an objective lens, a tube, a body or an optical window and comprises an optical input aperture of the microscope. The microscope 100 further comprises an optical system typically comprising lenses to generated a magnified image of the sample. The microscope 100 further comprises an ocular lens for direct observation of the sample by the user and/or a camera connector for connecting a camera to capture an image of the sample by the camera.

The optical system comprises an optical axis 104 extending through the light collecting element 103 and through the sample stage 102. An observation zone 105 is defined as a zone between the sample stage 102 and the light collecting element 103.

The sheath gas flow system 10 comprises an injector 20 comprising a housing 21. The housing 21 of the injector 20 comprises an injector wall 22 facing the sample stage 102 when the sheath gas flow system 10 is installed in the microscope 100. The injector wall 22 comprises an aperture 26 of any shape such as a circular shape or a U-shape. Preferably, the aperture 26 in the injector wall 22 is located at the center of the injector wall 22.

The injector housing 21 may be composed of two or more detachable parts.

Preferably, the sheath gas flow system 10 is detachably attachable to the microscope 100. Preferably, the housing 21 of the injector 20 is detachably attachable to the light collecting element 103 of the microscope 100. Preferably, the aperture 26 of the injector wall 22 is configured to receive the light collecting element 103.

Alternatively, the light collecting element 103 of the microscope 100 is integrated into the injector 20 at the aperture 26 of the injector wall 22, for instance, the light collecting element 103 is an optical aperture, an optical window or a lens situated in the aperture 26 of the injector wall 22.

The injector wall 22 comprises a plurality of injector orifices 24 in an injector surface 23 of the injector wall 22 surrounding the aperture 26 of the injector wall 22. The housing 21 of the injector 20 comprises at least one gas inlet 25 in fluid communication with the plurality of injector orifices 24. The at least one gas inlet 25 of the injector 20 may be in fluid communication with the plurality of injector orifices 24 via one or more chambers formed within the housing behind the injector wall.

The gas inlet 25 may comprise a connector for releasable coupling to a complementary connector of a gas supply conduit.

The sheath gas flow system 10 further comprises a gas supply system (not shown in the figures) comprising a gas source for supplying a sheath gas, for instance dry nitrogen or argon. The gas source may comprise a pressurized gas container, such as a gas bottle or a gas supply pump. The gas source may further include a filter, such as a membrane filter.

The gas supply system further comprises a gas conduit 40 configured to connect the gas source to the at least one gas inlet 25 of the injector 20. When installed in the microscope 100, the sheath gas flow system 10 is configured to generate a flow of sheath gas in at least a sheath surrounding the observation zone 105 of the microscope 100. In operation, the sheath gas is discharged by the plurality of injector orifices 24 and flows from the injector surface 23 of the injector 20 along the observation zone 105 essentially parallel to the optical axis 104 to the sample and shields the sample from the ambient air.

Preferably the gas supply system is configured to adjust the gas pressure such that the flow of the sheath gas in the sheath is mostly laminar. It is advantageous to have a laminar flow in the sheath because it avoids mixing of the gas inside and outside of the sheath and promotes particles or contaminants entering the flow to be carried away with flow within the sheath. Thus, the sheath provides an effective barrier separating the observation zone 105 from the surrounding space, in particular, when the flow in the sheath is laminar.

The flow of inert gas as a sheath around the observation zone of the microscope forms a shield materials on either side of the flow of inert gas. It may thus be used to protect operators as well as the material under microscope observation.

The sheath gas flow may also be used to remove evaporation gas where the microscope is used to manipulate materials stored in volatile chemicals such as solvents and thus it protects the operator from spilled gas in the observation zone.

The plurality of injector orifices 24 may be arranged on a ring surrounding the aperture 26 of the injector wall 22. The plurality of injector orifices 24 may be arranged on a plurality of concentric circles surrounding the aperture 26 of the injector wall 22. Each of the plurality of injector orifices 24 may have the shape of a circle, a line, a ring, or a ring segment. The number of injector orifices of the plurality of injector orifices 24 is preferably at least 2, more preferably at least 100, and even more preferably at least 1000. The plurality of injector orifices 24 may be evenly distributed over at least a portion of the injector surface 23. Each of the plurality of injector orifices 24 may have the same size.

The sheath gas flow system 10 further comprises an extractor 30 comprising a housing 31. The housing 31 of the extractor 30 comprises an extractor wall 32 facing the light collecting element 103 when the sheath gas flow system 10 is installed in the microscope 100 around the observation zone. The housing 31 of the extractor 30 may comprise an aperture 36 for receiving the light source 101 or serving as an optical aperture for the light source 101. Preferably, the aperture 36 in the extractor wall 32 is located at the center of the extractor wall 32. The extractor housing 31 may be composed of two or more detachable parts.

The extractor wall 32 comprises a plurality of extraction orifices 34 in an extractor surface 33 of the extractor wall 32 surrounding a central area. The central area may be defined by the aperture 36 of the extractor 30. The sample is intended to be placed in the central area. The extractor 30 may comprise a sample stage 102 providing translation and/or rotation of the sample or a sample holder. Alternatively, or in addition, the extractor 30 may be placed on a translation and/or rotation stage. Each of the plurality of extraction orifices 34 may have the shape of a circle, a line, a ring, or a ring segment. The number of extraction orifices of the plurality of extraction orifices 34 is preferably at least 2, more preferably at least 100, and even more preferably at least 1000. The plurality of extraction orifices 34 may be evenly distributed over at least a portion of the extractor surface 33. Each of the plurality of extraction orifices 34 may have the same size.

The housing 31 of the extractor 30 comprises at least one gas outlet 35, e.g., two gas outlets 35, in fluid communication with the plurality of extraction orifices 34. The at least one gas outlet 35 of the extractor 30 may be in fluid communication with the plurality of extraction orifices 34 via one or more chambers and/or one or more channels formed within the extractor housing behind the extractor wall.

The gas outlet 35 may comprise a connector for releasable coupling to a complementary connector of a gas extraction conduit.

The sheath gas flow system 10 further comprises a gas extraction system comprising an extraction pump (not shown in the figures) and a gas conduit 50. The extraction pump may be any means for creating a sufficiently negative pressure, such as a vacuum pump or an extraction fan, configured for extracting the volume of gas injected by the injector. The gas conduit 50 of the gas extraction system is configured to connect the extraction pump to the at least one gas outlet 35 of the extractor 30.

When installed in the microscope 100, the extractor 30 is configured to extract by the gas extraction system through the plurality of extraction orifices 34 at least a portion of the sheath gas supplied by the gas supply system and discharged by the plurality of injector orifices 24. In operation, the extraction pump creates a negative pressure compared to the ambient pressure and sucks gas into the plurality of extraction orifices 34.

Optionally, the extractor 30 comprises a holder 37, e.g., a storage for sample vials or tools. The holder 37 may be surrounded by the plurality of extraction orifices 34 (not shown).

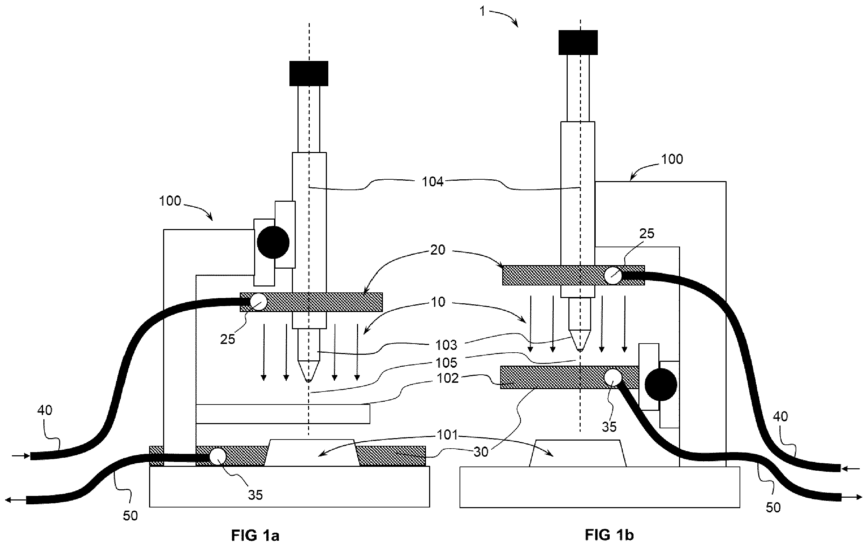

The extractor 30 may be mountable to the microscope 100 such that the sample stage 102 is located between the light collecting element 103 and the extractor 30 in the direction of the optical axis 104 as illustrated in Fig. 1a.

Preferably the extractor 30 is part of the sample stage of the microscope 100 as illustrated in Fig. 1b, such that the sample stage comprises the gas outlet 35 and a surface of the sample stage acts as the extractor surface 33 comprising the plurality of extraction orifices 34.

### List of references used

Microscope system 1
   **Microscope 100**
      Light source 101
      Sample stage 102
      Light collecting element 103
      Optical system
      Optical axis 104
      Observation zone 105
   **Sheath gas flow system 10**
      Injector 20
         Housing 21
         Injector wall 22
            Injector surface 23
            Injector orifices 24
            Aperture 26
         Gas inlet 25
      Extractor 30
         Housing 31
            Extractor wall 32
               Extractor surface 33
               Extraction orifices 34
            Aperture 36
            Gas outlet 35
         Holder 37
      Gas supply system
         Gas source
         Pressure control system
         Gas conduit 40
      Gas extraction system
         Extraction pump
         Gas conduit 50

## Claims

1. Sheath gas flow system (10) for a microscope (100), including an injector (20) and an extractor (30) configured to be mounted to said microscope about an observation zone (105) of the microscope, the injector (20) comprising a housing (21) having at least one sheath gas inlet (25) and an injector wall (22) comprising a plurality of sheath gas injector orifices (24) arranged around said observation zone when the sheath gas flow system is mounted to said microscope for injecting a sheath of gas around the observation zone (105), the extractor (30) comprising at least one gas outlet (35) and an extractor wall (32) comprising a plurality of sheath gas extraction orifices (34) for sucking in the sheath of gas.

2. Sheath gas flow system (10) according to the preceding claim, wherein the injector housing (21) comprises a chamber bounded by the injector wall (22) and connected fluidically to the at least one sheath gas inlet (25), the plurality of injector orifices (24) connected fluidically to the chamber and wherein the at least one gas outlet (35) of the extractor (30) is in fluid communication with the plurality of extraction orifices (34) via a chamber formed within a housing (31) of the extractor (30).

3. Sheath gas flow system (10) according to any preceding claim, wherein the at least one sheath gas inlet (25) comprises a releasable coupling for releasable connection to a complementary coupling of a first gas conduit (40) and wherein the at least one gas outlet (35) comprises a releasable coupling for releasable connection to a complementary connector of a second gas conduit (50).

4. Sheath gas flow system (10) according to any preceding claim, further comprising a gas supply system comprising a gas source for supplying a sheath gas.

5. Sheath gas flow system (10) according to the directly preceding claim, wherein the gas source comprises a filter, such as a membrane filter.

6. Sheath gas flow system (10) according to the directly preceding claim, wherein the gas supply system comprises a pressure control system to adjust the gas pressure such that the flow of the sheath gas in the sheath is laminar.

7. Sheath gas flow system (10) according to any preceding claim, wherein the injector (20) is removably mountable to the microscope (100).

8. Sheath gas flow system (10) according to the directly preceding claim, wherein the injector housing (21) comprises two or more detachable parts.

9. Sheath gas flow system (10) according to any of two the directly preceding claims, wherein the housing (21) of the injector (20) is removably mountable to a light collecting element (103) of the microscope (100).

10. Sheath gas flow system (10) according to any preceding claim, wherein the extractor (30) is removably mountable to the microscope (100).

11. Sheath gas flow system (10) according to the directly preceding claim, wherein the extractor housing (31) comprises two or more detachable parts.

12. Sheath gas flow system (10) according to the directly preceding claim, wherein an aperture (26) of the injector wall (22) is configured to receive the light collecting element (103).

13. Sheath gas flow system (10) according to any preceding claim, wherein the extractor wall (32) comprises a central area and the plurality of extraction orifices (34) surround the central area of the extractor wall (32).

14. Sheath gas flow system (10) according to any preceding claim, comprising a gas extraction system comprising an extraction pump.

15. Sheath gas flow system (10) according to the directly preceding claim, wherein the extractor housing (31) comprises an aperture (36) for receiving a light source (101) or serving as an optical aperture for a light source (101).

16. Microscope system (1) comprising a microscope (100) and the sheath gas flow system according to any preceding claim.

17. Microscope system (1) according to the directly preceding claim, wherein the light collecting element (103) of the microscope (100) is integrated into the injector (20) at the aperture (26) of the injector wall (22).
